# EUROPEAN PATENT APPLICATION

(11) **EP 4 786 169 A1**
(43) Date of publication of application: **05.08.2026**
(21) Application number: 24872356.1
(22) Date of filing: 26.09.2024
(51) Int. Cl.: B32B 27/00, B65D 65/40

(54) **LAMINATE FILM AND PACKAGING BODY**

(30) Priority: 27.09.2023 JP 2023166524
(71) Applicant: Sumitomo Bakelite Co., Ltd., Shinagawa-ku Tokyo 140-0002 (JP)
(72) Inventor: KAI, Hideki, Tokyo 140-0002 (JP)
(74) Representative: Müller-Boré & Partner Patentanwälte PartG mbB
(86) International application number: PCT/JP2024/034344
(87) International publication number: WO 2025/070570

(57) **Abstract**

The present invention provides a laminate film (1) for a blister pack, including: a substrate layer (11) containing a thermoplastic resin, which has excellent heat resistance, and a packaging body (10) including the laminate film (1) for a blister pack. The laminate film (1) according to the present invention is a laminate film (1) for a blister pack, including: a substrate layer (11), an anchor coat layer (12), and a printed layer (13) laminated in this order in a thickness direction, in which the substrate layer (11) contains a thermoplastic resin, and the anchor coat layer (12) and the printed layer (13) contain a cured substance of an ultraviolet-curable resin.

## Description

### TECHNICAL FIELD

The present invention relates to a laminate film and a packaging body.

### BACKGROUND ART

A laminate film formed by laminating a plurality of resin layers is widely used as a material for a packaging body.

On the other hand, such laminate films for packaging applications are produced and consumed in large quantities every day all over the world because of their high convenience, generating a large amount of waste after use. From the viewpoint of improving the global environment, the generation of such waste has become an important issue to be addressed. In recent years, methods for reducing the amount of waste generated, as well as methods for reusing (recycling) the waste, have been actively studied.

For example, when main constituent materials of the plurality of resin layers in the laminate film are of the same kind, there is no need to separate and reuse each resin layer separately, and the entire laminate film can be easily reused, thereby increasing the usefulness.

As such a laminate film, a polyethylene laminate for a packaging body material, which includes, for example, at least a stretched polyethylene film, an adhesive layer, and a heat-sealable polyethylene layer, in which the adhesive contains a solvent-free adhesive, is disclosed (see Patent Document 1).

Generally, products such as food and pharmaceuticals are packaged in a packaging body, such as a packaging bag or a packaging container at the time of sale. For such packaging bodies, various properties are required for protection of contents and for other purposes. Therefore, in some packaging bodies, a multilayer film formed body that is composite-structured (multi-layered) is used.

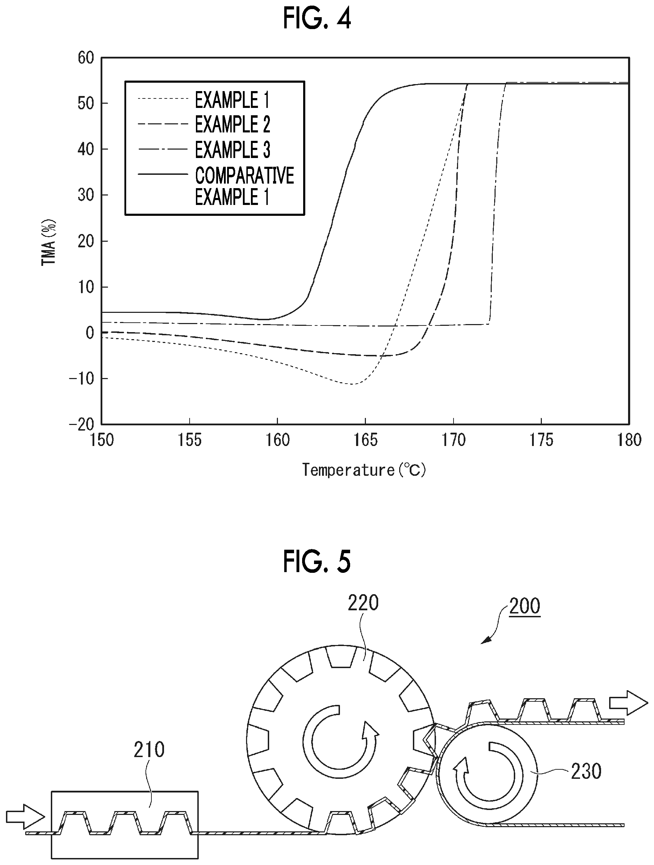

In addition, in the field of packaging pharmaceuticals, food, and the like, PTP (press through package) is widely used for packaging solid agents (medicines such as capsules and tablets, granular foods, and the like). As an apparatus for producing PTP, a production apparatus 200 as shown in FIG. 5 is generally used. The production apparatus 200 includes: a forming unit 210 for forming a film to obtain a formed body; a storage unit 220 that stores the formed body; and an adhering unit 230 that causes a cover film to adhere to the formed body.

As a method of producing PTP, for example, the PTP can be produced using the production apparatus 200. Specifically, the method of producing PTP includes: thermoforming a film by the forming unit 210 to produce a formed body including protruding formed portions; storing the formed body in a roll having a plurality of recess portions corresponding to the protruding formed portions such as a storage unit 220, and causing the cover film to be adhered by the adhering unit 230.

A multilayer film and a formed body thereof used for a packaging body are required to have impact resistance and gas barrier properties in order to impart a function of protecting contents and the like to the packaging body. For example, Patent Document 2 discloses a method for orienting crystals in a multilayer film by stretching a multilayer film composed of a polymer material, as a method for improving impact resistance and gas barrier properties. Further, a multilayer film (multilayer film formed body) having improved suitable oxygen barrier properties and a multilayer packaging body using the same are disclosed.

### Citation List

### Patent Document

Patent Document 1: Japanese Unexamined Patent Application, First Publication No. 2019-189333
Patent Document 2: Japanese Unexamined Patent Application, First Publication No. 2007-283569

### SUMMARY OF INVENTION

### Technical Problem

In the production of a PTP, aluminum or the like is typically used as a material for a cover film. Here, in order to reuse the entire PTP, it is conceivable to form the cover film of the same kind of resin as the formed body. However, in a case where the cover film is formed of the same kind of resin as the formed body, there is a problem that, when the cover film is adhered to the formed body, the cover film is melted by heat of the adhering unit 230 and taken by the adhering unit 230 (the cover film melts into a thread-like state and adheres to the adhering unit 230).

The present invention has been made in view of the above circumstances, and an object of the present invention is to provide a laminate film for a blister pack which includes a substrate layer containing a thermoplastic resin and has excellent heat resistance, and a packaging body including the same.

### Solution to Problem

In order to solve the above-described problems, the present invention adopts the following configurations.
[1]. A laminate film for a blister pack, including: a substrate layer, an anchor coat layer, and a printed layer laminated in this order in a thickness direction, in which the substrate layer contains a thermoplastic resin, and the anchor coat layer and the printed layer contain a cured substance of an ultraviolet-curable resin.
[2]. The laminate film for a blister pack according to [1], in which a melting point of the cured substance of the ultraviolet-curable resin contained in the anchor coat layer and the printed layer is 165°C or higher.
[3]. The laminate film for a blister pack according to [1] or [2], in which a surface of the substrate layer on an anchor coat layer side is corona-treated.
[4]. The laminate film for a blister pack according to [1] or [2], in which the thermoplastic resin is one kind or two or more kinds selected from the group consisting of polyethylene, polypropylene, and polyethylene terephthalate.
[5]. The laminate film for a blister pack according to [1] or [2], in which the ultraviolet-curable resin is one kind or two or more kinds selected from the group consisting of an ultraviolet-curable cationically curable epoxy resin, an ultraviolet-curable radically curable acrylic resin, an ultraviolet-curable radically curable urethane resin, an ultraviolet-curable radically curable vinyl ester resin, and an ultraviolet-curable radically curable polyester/alkyd resin.
[6]. The laminate film for a blister pack according to [1] or [2], in which, in the laminate film, a ratio of a total content of the same kind of thermoplastic resin to a total content of resins in the laminate film is 80% by mass or more.
[7]. A packaging body including: the laminate film for a blister pack according to [1] or [2].

### Advantageous Effects of Invention

According to the present invention, a laminate film for a blister pack including a substrate layer containing a thermoplastic resin and having excellent heat resistance, and a packaging body including the laminate film for a blister pack are provided.

### BRIEF DESCRIPTION OF DRAWINGS

[FIG. 1] A cross-sectional view schematically showing an example of a laminate film according to an embodiment of the present invention.
[FIG. 2] A perspective view schematically showing an example of a packaging body according to the embodiment of the present invention.
[FIG. 3] A cross-sectional diagram taken along line I-I of the packaging body shown in FIG. 2.
[FIG. 4] A graph showing a result of a thermomechanical analysis (TMA) of laminate films of Examples 1 to 3 and Comparative Example 1.
[FIG. 5] A graph for describing a method of producing PTP.

### DESCRIPTION OF EMBODIMENTS

<<Laminate Film (Lid Material)>>

A laminate film according to an embodiment of the present invention is a laminate film for a blister pack, including a substrate layer, an anchor coat layer, and a printed layer laminated in this order in a thickness direction, in which the substrate layer contains a thermoplastic resin, and the anchor coat layer and the printed layer contain a cured substance of a ultraviolet-curable resin.

The laminate film according to the present embodiment is for a blister pack. The laminate film may be used as a lid material or a bottom material of a blister pack, but is preferably used as a lid material.

### (1-second Heat Resistance Temperature)

In the case where a packaging body is produced by using the laminate film as a lid material of a blister pack, filling a bottom material with a solid agent, and heat-sealing peripheral portions of the lid material and the bottom material, the laminate film (lid material) has high heat resistance. Therefore, a highest temperature (1-second heat resistance temperature) at which the lid material is not taken by a roll (the adhering unit 230 in the production apparatus 200 shown in FIG. 5) even when the lid material is brought into close contact with the roll for 1 second or longer (a state where the lid material melts into a thread-like state and adheres to the roll does not occur) is preferably 165°C or higher, more preferably 170°C or higher, and further preferably 175°C or higher.

The 1-second heat resistance temperature of the laminate film can be adjusted, for example, by adjusting the kinds and contents of components contained in each layer constituting the laminate film, the thickness of each layer, and the like. In particular, the 1-second heat resistance temperature of the laminate film can be easily adjusted by adjusting the kinds and contents of components contained in the anchor coat layer and the printed layer, the thicknesses of the anchor coat layer and the printed layer, and the like. For example, the 1-second heat resistance temperature can be easily increased by selecting materials having a melting point of 165°C or higher as the components contained in the anchor coat layer and the printed layer and increasing the contents, and by increasing the thicknesses of the anchor coat layer and the printed layer.

In a thermomechanical analysis (TMA) of the laminate film, a temperature at which a thermal expansion rate of 5% is exhibited is preferably 165°C or higher, more preferably 168°C or higher, and even more preferably 170°C or higher.

When the temperature is equal to or higher than the lower limit, the heat resistance of the laminate film is further improved.

In the thermomechanical analysis of the laminate film, a thermal expansion rate at a temperature of 165°C is preferably 10% or less, more preferably 5% or less, and even more preferably 3% or less.

When the displacement is equal to or less than the upper limit, the heat resistance of the laminate film is further improved.

The thermomechanical analysis of the laminate film can be performed in accordance with JIS K 7196 by measuring the amount of thermal expansion of a sample from the difference in the amount of thermal expansion between a standard sample and a sample to be analyzed when the temperature is raised at a constant rate.

The thermomechanical analysis of the laminate film can be performed, for example, by using a sample having a width of 4 mm, a length of 10 mm, and a thickness of 25 µm, and measuring the displacement (amount of thermal expansion) of this sample in a film flow direction (MD).

During the thermomechanical analysis of the laminate film, the temperature at which a thermal expansion rate of 5% is exhibited and the thermal expansion rate at a temperature of 165°C can be adjusted, for example, by adjusting the kinds and contents of components contained in each layer constituting the laminate film, the thickness of each layer, and the like. In particular, the adjustment can be achieved by adjusting the kinds and contents of components contained in the anchor coat layer and the printed layer, the thicknesses of the anchor coat layer and the printed layer, and the like. For example, by selecting materials having a melting point of 165°C or higher as the components contained in the anchor coat layer and the printed layer and increasing the contents thereof, and by increasing the thicknesses of the anchor coat layer and the printed layer, the temperature at which a thermal expansion rate of 5% is exhibited can be easily increased, and the thermal expansion rate at a temperature of 165°C can be easily reduced.

### (Recyclability)

The recyclability of the laminate film can be adjusted by adjusting the kinds of contained components, the amounts of contained components, the thicknesses, and the like in each layer constituting the laminate film.

For example, in the laminate film, the recyclability of the laminate film can be further improved by increasing a ratio of a total content of the same kind of thermoplastic resin to a total content of resins of the laminate film.

In the present specification, the term "same kind of resin" is not limited to a case of thermoplastic resins, and means that, when resins having common constitutional units are compared with each other, a ratio of the amount (mol) of the common constitutional units to a total amount (mol) of constitutional units is 20 mol% or more in both resins. For example, a homopolypropylene (hPP), a random copolymer polypropylene (rPP), a block copolymer polypropylene (bPP), a propylene-ethylene random copolymer, a propylene-ethylene block copolymer, and a propylene-based elastomer are all considered to be of the same kind because a ratio of the amount (mol) of constitutional units derived from propylene to a total amount (mol) of constitutional units is 20 mol% or more. On the other hand, for example, among an ethylene-propylene random copolymer an ethylene-propylene block copolymer, and the like, those in which a ratio of the amount (mol) of constitutional units derived from propylene to a total amount (mol) of constitutional units is less than 20 mol% is not considered to be of the same kind as the above-described homopolypropylene or the like.

In the present embodiment, in any of the resins of the same kind, a ratio of the amount (mol) of the common constitutional units to the total amount (mol) of the constitutional units is preferably 30 mol% or more, more preferably 40 mol% or more, and even more preferably 50 mol% or more, and may be, for example, any of 60 mol% or more, 70 mol% or more, and 80 mol% or more.

In the laminate film, a ratio of a total content (parts by mass) of the same kind of thermoplastic resin in the laminate film to a total mass (parts by mass) of the resins in the laminate film is preferably 80% by mass or more, more preferably 85% by mass or more and 95% by mass or less, and still more preferably 90% by mass or more and 95% by mass or less.

When the ratio is equal to or more than the lower limit, the recyclability of the laminate film is further improved. When the ratio is equal to or less than the upper limit, a ratio of a sum of the thicknesses of the anchor coat layer and the printed layer can be further increased, and the heat resistance of the laminate film can be further improved.

A total thickness of the laminate film is not particularly limited, but for example, is preferably 25 µm or more and 100 µm or less, more preferably 25 µm or more and 60 µm or less, and further preferably 25 µm or more and 40 µm or less.

In the laminate film, it is preferable that all layers (for example, from the substrate layer to the printed layer) constituting the laminate film are non-stretched layers (films). Such a non-stretched laminate film is particularly excellent in formability, and is suitable for, for example, constituting a packaging body.

### <Substrate Layer>

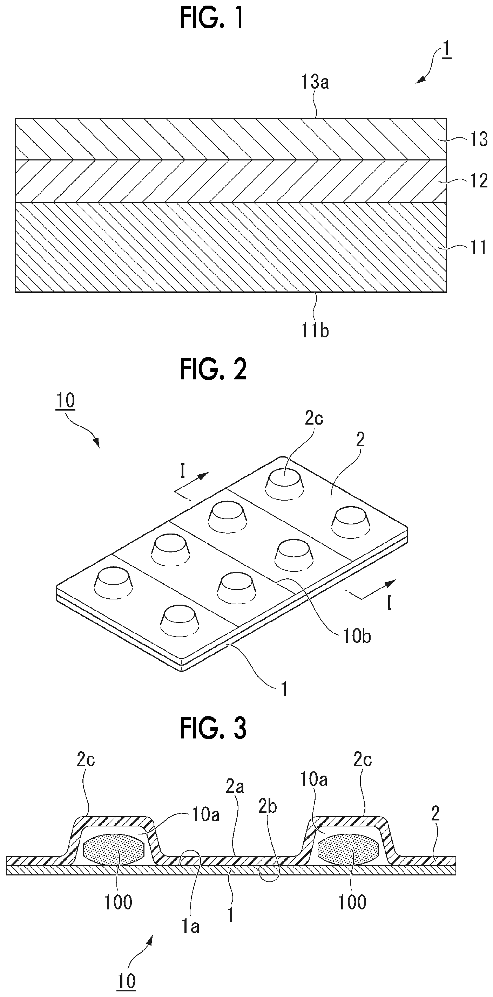

The laminate film according to the present embodiment includes a substrate layer (a substrate layer 11 in a laminate film 1 shown in FIG. 1). The substrate layer imparts rigidity to the laminate film.

The substrate layer contains a thermoplastic resin. By including the thermoplastic resin, the substrate layer can improve the rigidity of the laminate film.

The thermoplastic resin is preferably one kind or two or more kinds selected from the group consisting of polyethylene, polypropylene, and polyethylene terephthalate.

Examples of the polyethylene include very low-density polyethylene (VLDPE), metallocene-catalyzed linear very low-density polyethylene (mVLDPE), low-density polyethylene (LDPE), linear low-density polyethylene (LLDPE), metallocene-catalyzed linear low-density polyethylene (mLLDPE), and high-density polyethylene (HDPE).

Both linear low-density polyethylene (LLDPE) and metallocene-catalyzed linear low-density polyethylene (mLLDPE) are a kind of low-density polyethylene. In the present specification, LDPE means a low-density polyethylene that does not correspond to either LLDPE or mLLDPE, unless otherwise specified.

In addition, VLDPE means a very low-density polyethylene that does not correspond to mVLDPE.

In the present specification, a density of very low-density polyethylene (VLDPE) and metallocene-catalyzed linear very low-density polyethylene (mVLDPE) is less than 0.91 g/cm³.

In addition, a density of low-density polyethylene (LDPE), linear low-density polyethylene (LLDPE), and metallocene-catalyzed linear low-density polyethylene (mLLDPE) is 0.91 g/cm³ or more and less than 0.942 g/cm³.

In addition, a density of high-density polyethylene (HDPE) is 0.942 g/cm³ or more.

Examples of the polypropylene include polypropylene (homopolypropylene, hPP).

The polyethylene terephthalate contains ethylene glycol and terephthalic acid as main constituent components, and examples thereof include C-PET, A-PET, and G-PET. Other dicarboxylic acid components and glycol components may be copolymerized as long as the object of the present invention is not impaired. Examples of the other dicarboxylic acid components include isophthalic acid, p-β-oxyethoxybenzoic acid, 2,6-naphthalenedicarboxylic acid, 4,4'-dicarboxybenzophenone, bis-(4-carboxyphenylethane), adipic acid, sebacic acid, 5-sodium sulfoisophthalic acid, and cyclohexane-1,4-dicarboxylic acid. Examples of the other glycol component include propylene glycol, butanediol, neopentyl glycol, diethylene glycol, ethylene oxide adducts such as bisphenol A, polyethylene glycol, polypropylene glycol, and polytetramethylene glycol. In addition, oxycarboxylic acid components such as p-oxybenzoic acid may also be used.

The thermoplastic resin contained in the substrate layer may be only one kind or two or more kinds, and in a case of two or more kinds, a combination and a ratio thereof can be optionally selected according to the purpose.

It is more preferable that the substrate layer contains polypropylene as the thermoplastic resin.

The substrate layer may contain only the thermoplastic resin (that is, may consist of the thermoplastic resin), or may include the thermoplastic resin and other components (in the present specification, may be referred to as "other components") (that is, may consist of the thermoplastic resin and the other components).

The other components contained in the substrate layer are not particularly limited and can be optionally selected according to the purpose, and may be, for example, any of a resin component and a non-resin component.

The other components, which are the resin components, are resins other than the thermoplastic resin.

Examples of the other components, which are non-resin components, include additives well-known in the art.

Examples of the additives include anti-fogging agents, anti-blocking agents, antioxidants, antistatic agents, crystal nucleating agents, inorganic particles, viscosity-reducing agents, thickeners, heat stabilizers, lubricants, infrared absorbers, and ultraviolet absorbers.

In the substrate layer, a ratio of a content (parts by mass) of the thermoplastic resin to a total mass (parts by mass) of the substrate layer ([content (parts by mass) of thermoplastic resin in substrate layer]/[total mass (parts by mass) of substrate layer] × 100) is preferably 80% by mass or more, more preferably 90% by mass or more, and still more preferably 95% by mass or more, and may be, for example, any of 97% by mass or more and 99% by mass or more. When the ratio is equal to or more than the lower limit, the rigidity of the substrate layer is further improved, and the recyclability of the laminate film is further improved.

On the other hand, the ratio is 100% by mass or less.

The ratio is usually the same as a ratio of the content (parts by mass) of the thermoplastic resin to a total content (parts by mass) of components that do not vaporize at room temperature in a resin composition for forming a substrate layer, which will be described later ([content (parts by mass) of thermoplastic resin in resin composition for forming substrate layer]/[total content (parts by mass) of components that do not vaporize at room temperature in resin composition for forming substrate layer] × 100).

The thermoplastic resin when the above-described conditions of the ratio are satisfied may be any one kind or two or more kinds of polyethylene, polypropylene, and polyethylene terephthalate, but is preferably polypropylene.

The substrate layer may consist of one layer (single layer) or may consist of a plurality of layers of two or more layers. In a case where the substrate layer consists of a plurality of layers, the plurality of layers may be the same as or different from each other, and a combination of the plurality of layers is not particularly limited, as long as the effects of the present invention are not impaired.

A thickness of the substrate layer is preferably 10 µm or more and 85 µm or less, more preferably 15 µm or more and 50 µm or less, and even more preferably 20 µm or more and 40 µm or less.

When the thickness is equal to or more than the lower limit, the rigidity of the substrate layer can be further improved. When the thickness of the substrate layer is equal to or less than the upper limit, the substrate layer is further suppressed from having an excessive thickness.

Here, the "thickness of the substrate layer" means a thickness of the entire substrate layer, and for example, the thickness of the substrate layer including a plurality of layers means a total thickness of all layers constituting the substrate layer.

A ratio of the thickness of the substrate layer to the thickness of the laminate film is preferably 70% or more and 80% or less, more preferably 80% or more and 90% or less, and even more preferably 90% or more and 95% or less.

When the ratio is equal to or more than the lower limit, the rigidity of the substrate layer can be further improved. When the ratio is equal to or less than the upper limit, the substrate layer is further suppressed from having an excessive thickness.

It is preferable that a surface of the substrate layer on an anchor coat layer side, which will be described later, is corona-treated.

When the surface of the substrate layer on the anchor coat layer side is corona-treated, radicals are generated on the surface to be in an active state, the anchor coat layer, which will be described later, is easily adhered, and the anchor coat layer can be further suppressed from being peeled off from the laminate film. As a result, the printed layer provided on a surface of the anchor coat layer on a side opposite to a substrate layer side can be further suppressed from being peeled off from the laminate film.

A wettability of the substrate layer after the corona treatment is preferably 40 dynes or more, more preferably 45 dynes or more, and even more preferably 50 dynes or more.

### <Anchor Coat Layer>

The laminate film according to the present embodiment further includes an anchor coat layer (an anchor coat layer 12 in the laminate film 1 shown in FIG. 1) between the substrate layer and a printed layer, which will be described later.

In a case where the printed layer, which will be described later, contains a pigment, the printed layer is not easily adhered to the substrate layer containing the thermoplastic resin, and as a result, there is a problem that the printed layer is peeled off from the laminate film. On the other hand, when the laminate film further includes the anchor coat layer between the substrate layer and the printed layer, the printed layer is adhered to the anchor coat layer, and as a result, the printed layer can be suppressed from being peeled off from the laminate film. In addition, the anchor coat layer imparts heat resistance to the laminate film.

The anchor coat layer contains a cured substance of an ultraviolet-curable resin. Since the cured substance of the ultraviolet-curable resin generally has a higher melting point than the thermoplastic resin, the heat resistance of the laminate film can be improved.

A melting point of the cured substance of the ultraviolet-curable resin is preferably 165°C or higher, and more preferably 165°C or higher and 170°C or lower.

When the melting point is equal to or higher than the lower limit, the heat resistance of the laminate film can be further improved. When the melting point is equal to or lower than the upper limit, the formability of the laminate film can be further improved.

A thermal conductivity of the cured substance of the ultraviolet-curable resin is preferably 0.10 W/m·K or more and 0.30 W/m·K or less, more preferably 0.15 W/m·K or more and 0.30 W/m·K or less, and even more preferably 0.20 W/m·K or more and 0.30 W/m·K or less.

When the thermal conductivity is equal to or more than the lower limit, the formability of the laminate film can be further improved. When the thermal conductivity is equal to or less than the upper limit, the heat resistance of the laminate film can be further improved.

The ultraviolet-curable resin is preferably one kind or two or more kinds selected from the group consisting of an ultraviolet-curable cationically curable epoxy resin, an ultraviolet-curable radically curable acrylic resin, an ultraviolet-curable radically curable urethane resin, an ultraviolet-curable radically curable vinyl ester resin, and an ultraviolet-curable radically curable polyester/alkyd resin. Among these, the ultraviolet-curable radically curable acrylic resin is particularly preferable.

Examples of the ultraviolet-curable radically curable acrylic resin contained in the anchor coat layer include urethane acrylate, epoxy acrylate, acrylic acrylate, and polyester acrylate as a photopolymerizable oligomer, and a polyfunctional acrylate monomer and a monofunctional acrylate monomer as a photopolymerizable monomer.

The cured substance of the ultraviolet-curable resin contained in the anchor coat layer may be only one kind or two or more kinds, and in a case of two or more kinds, a combination and a ratio thereof can be optionally selected according to the purpose.

The anchor coat layer may contain only the cured substance of the ultraviolet-curable resin (that is, may consist of the cured substance of the ultraviolet-curable resin), or may contain the cured substance of the ultraviolet-curable resin and other components (in the present specification, may be referred to as "other components") (that is, may consist of the cured substance of the ultraviolet-curable resin and the other components).

The other components contained in the anchor coat layer are not particularly limited, and can be optionally selected according to the purpose, and may be, for example, any of a resin component and a non-resin component.

The other components, which are the resin components, are resins other than the cured substance of the ultraviolet-curable resin.

Examples of the other components, which are non-resin components, include additives well-known in the art.

Examples of the additives include anti-fogging agents, anti-blocking agents, antioxidants, antistatic agents, crystal nucleating agents, inorganic particles, viscosity-reducing agents, thickeners, heat stabilizers, lubricants, infrared absorbers, and ultraviolet absorbers.

The other components contained in the anchor coat layer may be only one kind or two or more kinds, and in a case of two or more kinds, a combination and a ratio thereof can be optionally selected according to the purpose.

In the anchor coat layer, a ratio of a content of the cured substance of the ultraviolet-curable resin to a total mass of the anchor coat layer is preferably 60 to 95% by mass, more preferably 80 to 95% by mass, even more preferably 90 to 95% by mass, and may be, for example, 80 to 95% by mass.

When the ratio is equal to or more than the lower limit, the heat resistance of the laminate film can be further improved. When the ratio is equal to or less than the upper limit, a thermal curing reaction can be sufficiently carried out.

The ratio is usually the same as a ratio of the content (parts by mass) of the cured substance of the ultraviolet-curable resin to a total content (parts by mass) of components that do not vaporize at room temperature in a resin composition for forming an anchor coat layer, which will be described later.

The anchor coat layer may consist of one layer (single layer) or may consist of a plurality of layers of two or more layers. In a case where the anchor coat layer consists of a plurality of layers, the plurality of layers may be the same as or different from each other, and a combination of the plurality of layers is not particularly limited as long as the effects of the present invention are not impaired.

A thickness of the anchor coat layer is preferably 0.5 µm or more and 5 µm or less, more preferably 1 µm or more and 4 µm or less, and even more preferably 2 µm or more and 3 µm or less.

When the thickness is equal to or more than the lower limit, the heat resistance of the laminate film can be further improved. When the thickness is equal to or less than the upper limit, the anchor coat layer is further suppressed from having an excessive thickness.

Here, the "thickness of the anchor coat layer" means a thickness of the entire anchor coat layer, and for example, the thickness of the anchor coat layer consisting of a plurality of layers means a total thickness of all layers constituting the anchor coat layer.

A ratio of the thickness of the anchor coat layer to the thickness of the laminate film is preferably 2% or more and 10% or less, more preferably 3% or more and 8% or less, and even more preferably 4% or more and 5% or less.

When the ratio is equal to or more than the lower limit, the heat resistance of the laminate film can be further improved. When the thickness is equal to or less than the upper limit, the anchor coat layer is further suppressed from having an excessive thickness.

### <Printed Layer>

The laminate film according to the present embodiment further includes a printed layer (a printed layer 13 in the laminate film 1 shown in FIG. 1). The outer layer imparts heat resistance to the laminate film.

The printed layer is preferably an outermost layer of the laminate film on the other side, and is preferably disposed on an outermost side of the laminate film in a laminating direction of the layers constituting the laminate film.

The printed layer contains a cured substance of an ultraviolet-curable resin. Since the cured substance of the ultraviolet-curable resin generally has a higher melting point than the thermoplastic resin, the heat resistance of the laminate film can be improved.

Examples of the melting point of the cured substance of the ultraviolet-curable resin include the same melting point as the cured substance of the ultraviolet-curable resin contained in the anchor coat layer, which has been described above.

Examples of a thermal conductivity of the cured substance of the ultraviolet-curable resin include the same thermal conductivity as the cured substance of the ultraviolet-curable resin contained in the anchor coat layer, which has been described above.

The ultraviolet-curable resin is preferably one kind or two or more kinds selected from the group consisting of an ultraviolet-curable cationically curable epoxy resin, an ultraviolet-curable radically curable acrylic resin, an ultraviolet-curable radically curable urethane resin, an ultraviolet-curable radically curable vinyl ester resin, and an ultraviolet-curable radically curable polyester/alkyd resin. Among these, the ultraviolet-curable radically curable acrylic resin is particularly preferable.

Examples of the ultraviolet-curable radically curable acrylic resin contained in the printed layer include urethane acrylate, epoxy acrylate, acrylic acrylate, and polyester acrylate as a photopolymerizable oligomer, and a polyfunctional acrylate monomer and a monofunctional acrylate monomer as a photopolymerizable monomer.

The cured substance of the ultraviolet-curable resin contained in the printed layer may be only one kind or two or more kinds, and in a case of two or more kinds, a combination and a ratio thereof can be optionally selected according to the purpose.

The printed layer may contain a pigment in addition to the cured substance of the ultraviolet-curable resin. By including the pigment, the printed layer can clearly display information on a solid agent stored in the packaging body including the laminate film.

Examples of the pigment include titanium oxide, carbon black, copper, and manganese.

The pigment contained in the printed layer may be only one kind or two or more kinds, and in a case of two or more kinds, a combination and a ratio thereof can be optionally selected according to the purpose.

The printed layer may contain only the cured substance of the ultraviolet-curable resin and the pigment (that is, may consist of the cured substance of the ultraviolet-curable resin and the pigment), or may contain the cured substance of the ultraviolet-curable resin, the pigment, and other components (in the present specification, may be referred to as "other components") (that is, may consist of the cured substance of the ultraviolet-curable resin, the pigment, and the other components).

Examples of the other components contained in the printed layer include the same other components as the other components contained in the anchor coat layer, which have been described above.

In the printed layer, a ratio of a content of the pigment to a total mass of the printed layer is preferably 0.1 to 15% by mass, more preferably 0.5% by mass or more and 10% by mass or less, and even more preferably 1% by mass or more and 5% by mass or less.

By setting the ratio to be equal to or more than the lower limit, information on the solid agent stored in the packaging body including the laminate film can be more clearly displayed. By setting the ratio to be equal to or less than the upper limit, excessive use of the pigment is further suppressed.

In the printed layer, a ratio of a content of the cured substance of the ultraviolet-curable resin to a total mass of the printed layer is preferably 70% by mass or more and 95% by mass or less, more preferably 80% by mass or more and 90% by mass or less, and may be, for example, any of 70% by mass or more and 80% by mass or less, 80% by mass or more and 90% by mass or less, or 90% by mass or more and 95% by mass or less.

When the ratio is equal to or more than the lower limit, the heat resistance of the laminate film can be further improved. When the ratio is equal to or less than the upper limit, a thermal curing reaction can be sufficiently carried out. The ratio is usually the same as a ratio of a content (parts by mass) of the cured substance of the ultraviolet-curable resin to a total content (parts by mass) of components that do not vaporize at room temperature in a resin composition for forming a printed layer, which will be described later.

The printed layer may consist of one layer (single layer) or may consist of a plurality of layers of two or more layers. In a case where the printed layer consists of a plurality of layers, the plurality of layers may be the same as or different from each other, and a combination of the plurality of layers is not particularly limited as long as the effects of the present invention are not impaired.

A thickness of the printed layer is preferably 1 µm or more and 15 µm or less, more preferably 2 µm or more and 10 µm or less, and even more preferably 4 µm or more and 6 µm or less. When the thickness is equal to or more than the lower limit, the heat resistance of the laminate film can be further improved. When the thickness is equal to or less than the upper limit, the printed layer is further suppressed from having an excessive thickness.

Here, the "thickness of the printed layer" means a thickness of the entire printed layer, and for example, the thickness of the printed layer consisting of a plurality of layers means a total thickness of all layers constituting the printed layer.

A ratio of the thickness of the printed layer to the thickness of the laminate film is preferably 5% or more and 20% or less, more preferably 8% or more and 15% or less, and even more preferably 10% or more and 12% or less.

When the ratio is equal to or more than the lower limit, the heat resistance of the laminate film can be further improved. When the thickness is equal to or less than the upper limit, the printed layer is further suppressed from having an excessive thickness.

### <Other Layer>

The laminate film may include, in a range not impairing the effects of the present invention, other layers that do not correspond to any of the substrate layer, the anchor coat layer, and the printed layer, for example, an oxygen barrier layer, a water vapor barrier layer, a sealant layer, or a gloss layer.

The other layers are preferably layers containing a thermoplastic resin, and by including such other layers, the recyclability of the laminate film can be improved.

Hereinafter, the present invention will be described in detail with reference to the drawings. In the drawings used in the following description, the main parts may be enlarged for convenience to make the features easy to understand, and dimensional ratios of each constituent element may not be the same as actual ratios.

FIG. 1 is a cross-sectional view schematically showing an example of the laminate film of the present embodiment.

The laminate film 1 shown here is configured by laminating, in this order, the substrate layer 11, the anchor coat layer 12, and the printed layer 13 in a thickness direction thereof.

One surface (surface on a side opposite to a printed layer 13 side) 11b of the substrate layer 11 is an exposed surface.

One surface (surface on a side opposite to a substrate layer 11 side, which may be referred to as a "first surface" in the present specification) 13a of the printed layer 13 is an exposed surface.

### <<Method of Producing Laminate Film (Lid Material)>>

Next, an example of a method of producing the laminate film (lid material) described above will be described.

The method of producing the above-described laminate film is not particularly limited, and examples thereof include a co-extrusion T-die method such as a feed block method or a multi-manifold method in which a resin or the like serving as a raw material is melt-extruded by a plurality of extruders, an air-cooled or water-cooled co-extrusion inflation method, and a lamination method. Among these, a method of forming a film by the co-extrusion T-die method is particularly preferable from the viewpoint of excellent control of the thickness of each layer.

As subsequent steps, a dry lamination method, an extrusion lamination method, a hot-melt lamination method, a wet lamination method, a thermal lamination method, or the like, in which single-layer sheets or films forming the respective layers are bonded using an appropriate adhesive, and combinations of these methods are used. In addition, the layers may be laminated by a coating (application) method.

The above-described anchor coat layer can be laminated, for example, by applying a resin composition for forming an anchor coat layer, which will be described later, and curing the resin composition by irradiation with light such as ultraviolet rays.

The above-described printed layer can be laminated, for example, by printing a resin composition for forming a printed layer and curing the resin composition by irradiation with light such as ultraviolet rays at the same time as the printing.

The resin composition for forming an anchor coat layer and the resin composition for forming a printed layer may be cured at the same time by irradiation with light such as ultraviolet rays.

The resin composition used as a material for forming any of the layers in the laminate film may be produced by adjusting kinds and contents of components to be contained so that a layer to be formed contains desired components in desired contents. For example, a ratio of contents of components in the resin composition, which do not vaporize at room temperature, is usually the same as a ratio of contents of the components in a layer formed by using this resin composition.

Examples of the resin composition (in the present specification, may be referred to as a "resin composition for forming a substrate layer") for forming the substrate layer (the substrate layer 11 in the laminate film 1 shown in FIG. 1) include a resin composition containing the thermoplastic resin and, as necessary, other components other than the thermoplastic resin. The other components are the components described above.

Examples of the resin composition (in the present specification, may be referred to as a "resin composition for forming an anchor coat layer") for forming the anchor coat layer (the anchor coat layer 12 in the laminate film 1 shown in FIG. 1) include a resin composition containing the ultraviolet-curable resin, a photopolymerization initiator as necessary, and other components other than the photopolymerization initiator as necessary. The other components are the components described above.

Examples of the photopolymerization initiator include various derivatives of benzophenone-based, acetophenone-based, benzoin ether-based, and thioxanthone-based compounds.

The photopolymerization initiator contained in the anchor coat layer may be only one kind or two or more kinds, and in a case of two or more kinds, a combination and a ratio thereof can be optionally selected according to the purpose.

In the resin composition for forming an anchor coat layer, a ratio of a content of the photopolymerization initiator to a total mass of the resin composition for forming an anchor coat layer is preferably 0.01% by mass or more and 5% by mass or less, more preferably 0.05% by mass or more and 3% by mass or less, and even more preferably 0.1% by mass or more and 1% by mass or less.

When the ratio is equal to or more than the lower limit, a photopolymerization reaction of the anchor coat layer can be further promoted. When the ratio is equal to or less than the upper limit, the photopolymerization reaction of the anchor coat layer can be sufficiently carried out.

The ratio is usually the same as a ratio of the content (parts by mass) of the photopolymerization initiator to a total content (parts by mass) of components that do not vaporize at room temperature in a resin composition for forming an anchor coat layer, which will be described later.

Examples of the resin composition (in the present specification, may be referred to as a "resin composition for forming a printed layer") for forming the printed layer (the printed layer 13 in the laminate film 1 shown in FIG. 1) include a resin composition containing the ultraviolet-curable resin, the photopolymerization initiator as necessary, the pigment as necessary, and other components other than the photopolymerization initiator as necessary. The other components are the components described above.

Examples of the photopolymerization initiator contained in the resin composition for forming a printed layer include the same photopolymerization initiator as the photopolymerization initiator contained in the resin composition for forming an anchor coat layer, which has been described above.

The photopolymerization initiator contained in the resin composition for forming a printed layer and the photopolymerization initiator contained in the resin composition for forming an anchor coat layer may be the same as or different from each other.

### <<Packaging Body>>

The packaging body according to the present embodiment includes the laminate film for a blister pack according to the present embodiment described above.

Since the packaging body according to the present embodiment includes the laminate film for a blister pack according to the present embodiment described above, the packaging body includes a substrate layer containing a thermoplastic resin and has excellent heat resistance.

FIG. 2 is a perspective view schematically showing an embodiment of a packaging body according to the present invention, and FIG. 3 is a cross-sectional perspective view taken along line I-I of the packaging body shown in FIG. 2.

In FIG. 2 and subsequent figures, the same constituent elements as those shown in the figures that have already been described will be denoted by the same reference numerals as those used in the figures that have been described, and further detailed description thereof will not be repeated.

A packaging body 10 shown in FIGS. 2 and 3 is configured to include the laminate film 1 (lid material) and a formed film 2 (bottom material). In the formed film 2, protruding portions 2c constituting storage portions 10a of the packaging body 10 is formed.

The packaging body 10 is a PTP (packaging container) as a blister pack, and solid agents 100 can be sealed and stored in the storage portions 10a.

The other surface 2b of the formed film 2 is adhered to one surface 1a of the laminate film 1. However, in some regions, the packaging body 1 protrudes toward one surface 2a side. The second surface 2b of the protruding portion 2c is not adhered to the first surface 1a of the laminate film 1, and the second surface 2b of the packaging body 1 and the first surface 1a of the laminate film 1 form the storage portion 10a.

Slits 10b are formed in the laminate film 1 and the formed film 2. The slit 10b is an optional configuration and may not be necessarily formed; however, by forming the slits 10b, the packaging body 10 can be easily divided into sections according to the particular number of solid agents 100 stored in the storage portions 10a, thereby improving convenience of the packaging body 10.

Here, the packaging body 10 is shown as having the protruding portion 2c with a dome-shaped top wall, but an outer shape of the protruding portion 2c is not limited thereto and can be selected optionally according to a shape of the solid agent 100 to be stored. For example, the protruding portion 2c may be a truncated cone-shaped protruding portion having a circular flat plate-shaped top wall. In addition, when viewed in a plan view looking down at the packaging body 10 from a protruding portion 2c side, the outer shape of the protruding portion 2c may be a polygonal shape such as a triangle, a quadrangle, a pentagon, or a hexagon, or may be an oval shape or the like.

Examples of the solid agent 100 include a drug such as a capsule or a tablet, and a granular food product.

In addition, although the packaging body 10 shown here has ten protruding portions 2c, the number of protruding portions 2c is not limited thereto.

Examples of the material of the formed film 2 include the same thermoplastic resin as the thermoplastic resin contained in the substrate layer described above.

In the formed film 2, a ratio of a total content (parts by mass) of the same kind of thermoplastic resin in the formed film 2 to a total mass (parts by mass) of resins in the formed film 2 is preferably 85% by mass or more, more preferably 90% by mass or more, and even more preferably 95% by mass or more.

When the ratio is equal to or more than the lower limit, recyclability of the formed film 2 is further improved.

In the packaging body (lid material and bottom material), a ratio of a total content (parts by mass) of the same kind of thermoplastic resin in the packaging body to a total mass (parts by mass) of resins in the packaging body is preferably 85% by mass or more, more preferably 90% by mass or more, and even more preferably 95% by mass or more.

When the ratio is equal to or more than the lower limit, recyclability of the packaging body is further improved.

The packaging body according to the present embodiment is suitable for use in various applications in which heat resistance is required, and is suitable as, for example, a packaging bag or a packaging container for packaging food, pharmaceuticals, and the like, but is more preferably used for packaging a drug. The packaging body may be a press-through package.

### <<Method of Producing Packaging Body>>

The packaging body according to the present embodiment can be produced by using the above-mentioned laminate film and bonding the laminate films to each other or bonding the laminate film to another film or the like to form a desired solid agent storage portion.

For example, the packaging body 10 shown in FIGS. 2 and 3 can be produced using a known PTP packaging machine.

More specifically, first, the formed film 2 is prepared by forming the protruding portion 2c in the resin film by plug forming, air-assisted plug forming, pressure forming, plug-assisted pressure forming, vacuum forming, or the like.

Next, protruding portion 2c of the formed film 2 is filled with the solid agent 100 to be preserved. Then, the laminate film 1 is overlapped with the formed film 2 and the laminate film 1 and the formed film 2 are adhered together.

Next, as necessary, the slit 10b is formed in the laminate film 1 and the formed film 2 using a perforation blade, a half-cut blade, or the like.

Thus, the packaging body 10 is obtained.

Since the packaging body 10 according to the present embodiment includes the laminate film 1 described above, the packaging body 10 includes a substrate layer containing a thermoplastic resin and has excellent heat resistance.

### Examples

Hereinafter, the present invention will be described in more detail by way of specific Examples. However, the present invention is not intended to be limited to the following Examples.

### [Example 1]

### <Production of Laminate film (Lid Material)>

A laminate film having the configuration shown in FIG. 1 was produced according to the following procedure.

That is, as a thermoplastic resin constituting a substrate layer, a biaxially stretched polypropylene film (PP2) ("FOH-L" manufactured by Futamura Chemical Co., Ltd., thickness: 25 µm) was prepared.

As an ultraviolet-curable resin constituting an anchor coat layer, an undercoat liquid for UV inkjet (AC1) ("Uvijet MK702" manufactured by FUJIFILM Corporation) was prepared.

As an ultraviolet-curable resin constituting a printed layer, a UV inkjet ink (AC2) ("Uvijet MKA52" manufactured by FUJIFILM Corporation) was prepared.

Using a corona treatment device ("HFSS-101" manufactured by KASUGA DENKI, INC.), one surface of the PP2 was subjected to a corona treatment under in-line conveying conditions such that the wettability was 40 dynes or more.

The AC1 was applied to the one surface of the PP2 subjected to the corona treatment.

The AC2 was printed on an exposed surface of the AC1 obtained above using a UV inkjet printing device ("UV inkjet Jet Press 540WV for flexible packaging" manufactured by FUJIFILM Corporation) while irradiating the surface with ultraviolet rays having a wavelength of 360 nm, thereby forming the anchor coat layer (thickness: 1 µm) and the printed layer (thickness: 3 µm).

As a result, a laminate film (lid material, thickness: 29 µm) was obtained in which the substrate layer, the anchor coat layer, and the printed layer were laminated in this order in the thickness direction, and the thickness of each layer was as shown in Table 1.

### <Production of Formed Film (Bottom material)>

A formed film was produced according to the following procedure.

That is, as a resin constituting the formed film, polypropylene (PP3) ("E122V" manufactured by Prime Polymer Co., Ltd.) was prepared.

A single-layer film (thickness: 250 µm) was manufactured by extrusion-molding the PP3.

A formed film was produced using the single-layer film obtained above.

Specifically, using a blister packaging machine ("FBP-300E" manufactured by CKD Corporation), two rows of solid agent storage portions, each having five solid agent storage portions protruding in the thickness direction, were formed. Then, the single-layer film was cut to a length of about 50 mm to produce a formed film (bottom material). The solid agent storage portion was a recessed portion having an inner diameter of 10 mm and a depth of 5 mm.

### <Production and Evaluation of Packaging Body>

### (1-second Heat Resistance Temperature)

The formed film (bottom material) obtained above was filled with a solid agent (zeolite, φ7 mm × 2.1 mm), and the formed film was placed to oppose the laminate film (lid material) obtained above. Using a sealing machine ("FBP-300E" manufactured by CKD Corporation), peripheral edge portions of the lid material and the bottom material were heat-sealed under conditions of a sealing temperature of 140°C to 175°C and a sealing time of 1 second, thereby producing a packaging body.

When producing the packaging body, a highest temperature (1-second heat resistance temperature) at which the lid material was not taken by a roll (the adhering unit 230 in the production apparatus 200 shown in FIG. 5) even when the lid material was brought into close contact with the roll for 1 second or longer (a state where the lid material melts into a thread-like state and adheres to the roll does not occur) was checked. The results are shown in Table 1.

### (Temperature at Which Thermal Expansion Rate of 5% Is Exhibited, Thermal Expansion Rate at Temperature of 165°C)

The laminate film (lid material) obtained above was subjected to a thermomechanical analysis using a thermal analyzer ("TMA7100" manufactured by Hitachi High-Tech Corporation) in accordance with JIS K 7196. Then, from the obtained thermomechanical analysis curve, a temperature (°C) at which a thermal expansion rate of 5% was exhibited and a thermal expansion rate (%) at a temperature of 165°C were determined. The results are shown in Table 1.

In a case where the thermal expansion rate (%) at a temperature of 165°C was a negative value, the case indicates that the laminate film has shrunk as determined by the thermomechanical analysis.

### (Recyclability)

The recyclability of the laminate film (lid material) obtained above was evaluated according to the following criteria. The results are shown in Table 1.

### (Evaluation Criteria)

A: In the laminate film, a ratio of a total content of the same kind of thermoplastic resin in the laminate film to a total content of resins in the laminate film was 75% by mass or more and 99% by mass or less.

B: In the laminate film, a ratio of a total content of the same kind of thermoplastic resin in the laminate film to a total content of resins in the laminate film was 5% by mass or more and 74% by mass or less.

### [Example 2]

The laminate film and the packaging body were produced and the packaging body was evaluated by the same method as in Example 1, except that the thickness of the printed layer was changed to 5 µm. The results are shown in Table 1.

### [Example 3]

The laminate film and the packaging body were produced and the packaging body was evaluated by the same method as in Example 1, except that the thickness of the printed layer was changed to 7 µm. The results are shown in Table 1. In addition, the thermomechanical analysis curve is shown in FIG. 4.

### [Comparative Example 1]

The laminate film and the packaging body were produced and the packaging body was evaluated by the same method as in Example 1, except that no printed layer was provided. The results are shown in Table 1. In addition, the thermomechanical analysis curve is shown in FIG. 4.

**[Table 1]**

| | | | Example 1 | Example 2 | Example 3 | Comparative Example 1 |
|---|---|---|---|---|---|---|
| Configuration of laminate film | Printed layer | Material | AC 2 | AC 2 | AC 2 | - |
| | | Thickness (µm) | 3 | 5 | 7 | - |
| | Anchor coat layer | Material | AC 1 | AC 1 | AC 1 | - |
| | | Thickness (µm) | 1 | 1 | 1 | - |
| | Substrate layer | Material | PP 2 | PP 2 | PP 2 | PP 2 |
| | | Thickness (µm) | 25 | 25 | 25 | 25 |
| | Total thickness (µm) | | 29 | 31 | 33 | 25 |
| Evaluation results of packaging body | 1-second heat resistance temperature | | 165 | 168 | 172 | 160 |
| | Temperature at which thermal expansion rate of 5% is exhibited | | 167 | 169 | 172 | 161 |
| | Thermal expansion rate at temperature of 165°C | | -10 | -5 | 1.5 | 47 |
| | Recyclability | | A | A | A | A |

As is clear from the above results, in the packaging bodies of Examples 1 to 3 and Comparative Example 1, in the laminate film (lid material) forming the packaging body, the ratio of the total content of the same kind of thermoplastic resin in the laminate film to the total content of the resins in the laminate film was 75% by mass or more and 99% by mass or less, and all of the packaging bodies had excellent recyclability.

Since the packaging bodies of Examples 1 to 3 were provided with the printed layer and the anchor coat layer, the 1-second heat resistance temperature was as high as 165°C to 172°C, the temperature at which a thermal expansion rate of 5% was exhibited was as high as 167°C to 172°C, the thermal expansion rate at a temperature of 165°C was as low as -10% to 1.5%, and the heat resistance was excellent.

In particular, it could be seen that, in Examples 1 to 3, as the thickness of the printed layer increased, the 1-second heat resistance temperature also tended to increase.

Contrary to this, since the packaging body of Comparative Example 1 was not provided with the printed layer and the anchor coat layer, the 1-second heat resistance temperature was as low as 160°C, the temperature at which a thermal expansion rate of 5% was exhibited was as low as 161°C, the thermal expansion rate at a temperature of 165°C was as high as 47%, and the heat resistance was poor.

As is clear from FIG. 4, since the laminate films (lid materials) of Examples 1 to 3 were provided with the printed layer and the anchor coat layer, the softening temperature shifted to the high temperature side by 6°C to 12°C, and the heat resistance was excellent.

Contrary to this, since the laminate film (lid material) of Comparative Example 1 was not provided with the printed layer and the anchor coat layer, the softening temperature did not shift to the high temperature side, and the heat resistance was poor.

### INDUSTRIAL APPLICABILITY

The present invention can be used for packaging bodies used for preserving food, pharmaceuticals, and the like.

### REFERENCE SIGNS LIST

1 Laminate film
1a First surface of laminate film
11 Substrate layer
12 Anchor coat layer
13 Printed layer
2 Formed film
2a First surface of formed film
2b Second surface of formed film
2c Protruding portion of formed film
10 Packaging body
10a Storage portion of packaging body
10b Slit of packaging body
100 Solid agent
200 Production apparatus
210 Forming unit
220 Storage unit
230 Adhering unit

## Claims

1. A laminate film for a blister pack, comprising:
a substrate layer, an anchor coat layer, and a printed layer laminated in this order in a thickness direction,
wherein the substrate layer contains a thermoplastic resin, and
the anchor coat layer and the printed layer contain a cured substance of an ultraviolet-curable resin.

2. The laminate film for a blister pack according to Claim 1,
wherein a melting point of the cured substance of the ultraviolet-curable resin contained in the anchor coat layer and the printed layer is 165°C or higher.

3. The laminate film for a blister pack according to Claim 1 or 2,
wherein a surface of the substrate layer on an anchor coat layer side is corona-treated.

4. The laminate film for a blister pack according to Claim 1 or 2,
wherein the thermoplastic resin is one kind or two or more kinds selected from the group consisting of polyethylene, polypropylene, and polyethylene terephthalate.

5. The laminate film for a blister pack according to Claim 1 or 2,
wherein the ultraviolet-curable resin is one kind or two or more kinds selected from the group consisting of an ultraviolet-curable cationically curable epoxy resin, an ultraviolet-curable radically curable acrylic resin, an ultraviolet-curable radically curable urethane resin, an ultraviolet-curable radically curable vinyl ester resin, and an ultraviolet-curable radically curable polyester/alkyd resin.

6. The laminate film for a blister pack according to Claim 1 or 2,
wherein, in the laminate film, a ratio of a total content of the same kind of thermoplastic resin to a total content of resins in the laminate film is 80% by mass or more.

7. A packaging body comprising:
the laminate film for a blister pack according to Claim 1 or 2.
